# EUROPÄISCHE PATENTSCHRIFT

(11) **EP 0 583 718 B1**
(45) Veröffentlichungstag und Bekanntmachung des Hinweises auf die Patenterteilung: **03.07.1996**
(21) Anmeldenummer: 93112775.7
(22) Anmeldetag: 10.08.1993
(51) Int. Cl.: B29C 45/17

(54) **Kunststoff-Spritzgiessmaschine**
Plastic injection moulding machine
Machine à mouler des matières plastiques par injection

(30) Priorität: 18.08.1992 DE 4227336
(43) Veröffentlichungstag der Anmeldung: 23.02.1994
(73) Patentinhaber: Hehl, Karl, D-72290 Lossburg (DE)
(72) Erfinder: Hehl, Karl, D-72290 Lossburg (DE)
(74) Vertreter: Frank, Gerhard, Dipl.-Phys.

(56) Entgegenhaltungen:
- EP-A- 0 291 008
- EP-A- 0 368 149
- EP-A- 0 483 492

## Beschreibung

Die Erfindung betrifft eine Kunststoff-Spritzgießmaschine nach dem Oberbegriff des Anspruches 1.

Eine derartige Spritzgießmaschine ist aus der DE-PS 40 34 577 bekannt. Mit dieser Maschine können wahlweise weitere Spritzgießformen zum Einsatz kommen, deren nichtzentrale Angußöffnungen bei zentralem Formhohlraum unterschiedliche Positionen aufweisen. Unter diesen Voraussetzungen gelangt der plastifizierte Kunststoff beim Einspritzen über einen etwa parallel zur Schließrichtung der Formschließeinheit verlaufenden Angußkanal in den Formhohlraum, welcher Angußkanal am Rand des Formhohlraumes endet. Ein solcher Anguß wird im folgenden als "Parallelanguß" bezeichnet. In dieser Maschine werden in einer horizontalen Ebene liegende Kolbenstangen beweglich in einem Muffenträger geführt, der bei Verschiebung der Spritzgießeinheit passiv mitgeführt wird oder auch für sich manuell verschiebbar ist. Beim Einspritzen des Kunststoffes bewirkt dabei eine dem Anlagedruck des Plastifizierzylinders entgegengesetzte Kraft in den Kolbenstangen eine Arretierung des Muffenträgers an punktförmigen Führungsorganen. Zwar ist die Verbindung der die Kolbenstangen aufnehmenden Muffen über den Muffenträger zum Formträger auf einfache Weise gelöst, jedoch ergibt sich durch den Abstand zwischen dem Angriffspunkt der Kolbenstangen und den Krafteinleitungspunkten der Führungsorgane in den Formträger ein Kraftfeld, das bei größeren Verschiebungen eine seitliche Versetzung der Führungsorgane erfordert, so daß diese Vorrichtung einer automatisierten Verschiebung über die gesamte Breite des Formträgers nicht zugänglich ist.

Aus der DE-PS 38 37 641 ist die Lagerung einer Spritzgießeinheit auf einem die Spritzgießeinheit tragenden gußeisernen Träger bekannt, der auf horizontalen Führungen an zentrale und nichtzentrale Angußöffnungen verschiebbar ist. Die Verschiebung erfolgt über eine aus Wegmeßeinrichtung und Spindeltrieb gebildete, nach Programm betätigbare Verschiebeeinrichtung, die lösbar am Träger befestigt ist. Es läßt sich damit die Spritzgießeinheit genau abstützen und justieren, wobei bewußt eine aufwendige Abstützung in Form des Verschiebetisches in Kauf genommen wird. Problematisch ist in diesem Zusammenhang aber auch, daß der Zugang zur Förderschnecke, insbesondere zu Reinigungszwecken, durch die parallel zur Spritzachse vorgegebene Anordnung der Spritzgießeinheit erschwert ist.

Ausgehend von diesem Stand der Technik liegt der Erfindung die Aufgabe zugrunde, eine Kunststoff-Spritzgießmaschine der eingangs genannten Gattung derart weiterzubilden, daß eine Verschiebung der Spritzgießeinheit auf kostengünstige und einfache Weise verwirklicht wird, die allen beim Spritzbetrieb auftretenden Anforderungen gerecht wird.

Diese Aufgabe wird durch die Merkmale des Anspruches 1 gelöst.

Durch den verringerten Abstand zwischen Verschiebeeinrichtung und Führungsorganen, in denen die Verschiebung erfolgt, wird die Gefahr von Verkantungen verringert. Die Verschiebung der Spritzgießeinheit erfolgt nur noch am Formträger. Im übrigen Bereich ist die Spritzgießeinheit frei verschieblich gelagert und gleitet auf dem Maschinenfuß. Trotz des somit außermittigen Angriffs der Verschiebeeinrichtung, werden die auftretenden Kräfte sicher bewältigt, so daß das große Moment bei diesem Angriff bewußt in Kauf genommen werden kann. Von selbst ergibt sich dann aber bei jedem Spritzzyklus eine exakte Düsenmitte, da ein selbständiges Einrichten der Spritzgießeinheit während der Arretierbewegung nicht durch den weit vom Zylinderkopf entfernten Verschiebemechanismus behindert wird.

Bei einer Ausgestaltung nach den Ansprüchen 2-3 läßt sich der Muffenträger mitsamt der Spritzeinheit über eine Spindel verschieben. Die Spindel kann bedarfsweise nachgerüstet werden und es besteht auch die Möglichkeit, nach den jeweiligen Anforderungen des Kunden, die Spritzgießeinheit motorisch zu verschieben. Insofern ist es erforderlich, entweder eine Wegmeßeinrichtung, die dem Bediener visuell die Möglichkeit einer Einstellung gibt, oder eine elektronische Wegmeßeinrichtung vorzusehen, die bei einer automatisierten Anlage über den ermittelten Verschiebeweg den die Verschiebung bewirkenden Motor steuert.

Weitere Verbesserungen hinsichtlich der Krafteinleitung in den Formträger ergeben sich bei einer Ausgestaltung nach den Ansprüchen 4, 5. Zum einen wird durch eine Führungsschiene gewährleistet, daß die Kraft gleichmäßig auf den Formträger übertragen wird, und eine sichere Führung ist durch eine Führungsnut gewährleistet, in der die Führungsschiene läuft. Da die Krafteinleitung einer dem Anlagedruck des Plastifizierzylinders entgegengesetzten Kraft in den Kolbenstangen auf ein nahezu sich über die gesamte Breite erstreckendes Führungsorgan erfolgt, ergibt sich in jeder Stellung eine kräfteidentische Anbindung. Dadurch ist nicht mehr die Spritzgießeinheit an verschiedenen Punkten am Formträger anzubinden. Die Spritzgießeinheit kann stattdessen in jede beliebige Stellung verschoben werden. Der Kunde kann insbesondere in einem nicht automatisierten Zustand die Spritzgießeinheit in der verschobenen Stellung durch ein Spannelement vorläufig festlegen. Durch die Ausgestaltung eines durch die Führungsnut hervorgerufenen Hintergriffs ist es nämlich möglich, daß durch den Anlagedruck das Spannelement nicht den beim Einspritzen entstehenden hohen Zugkräften unterworfen wird. Eine Arretierung erfolgt in dieser Stellung durch das Anpressen der formseitigen Wandung der Nut an die formseitige Wandung der Führungsschiene.

Bei einer Ausgestaltung nach Anspruch 6 können beliebig ausgebildete Spritzgießeinheiten, gleichgültig in welcher Lage die Endbereiche der Antriebseinheit angeordnet sind, angekuppelt werden.

Die Abstützung der Spritzgießeinheit erfolgt bei einer Ausgestaltung nach den Ansprüchen 7-8 dadurch, daß lediglich Schienen aufeinandergleiten. Insofern wird auf aufwendige Verschiebemechanismen verzichtet und die Verschiebeeinrichtung mit den außermittig angreifenden Reibungskräften der Auflage belastet. Die Oberflächenreibung kann durch ein Plasmanitrieren der Reibungsflächen verringert werden, wobei zugleich auch den Erfordernissen eines zuverlässigen Rostschutzes genügt wird. Durch die Flachmaterialien ist auf einfachste Weise ein maßgenaues Abstützen möglich, ohne daß der Maschinenfuß starr auszubilden ist. Nur an ihren Auflagepunkten muß am Maschinenfuß ein Aufwand getrieben werden, um den Anschluß der Schienen an den Maschinenfuß in einer justierbaren Weise zu gewährleisten. Selbst wenn der Maschinenfuß vor Ort ungenau eingerichtet ist, kann durch die Justiermöglichkeit nach Anspruch 8 die gesamte Spritzgießeinheit maßgenau eingestellt werden. Grundsätzlich genügt aber auch eine feste Verbindung der Kreuzschienen mit dem Maschinenfuß, so daß mit der Justierung des Maschinenfußes die Kreuzschienen von selbst miteingerichtet werden.

Durch die Ausbildung eines Schlittens, der auf Schienen gleitet, die nur an den Seitenrändern des Maschinenfußes abgestützt sind, ist der Raum im Maschinenfuß jederzeit zu Wartungszwecken zugänglich. Unter den Schienen können die Abdeckungen des Maschinenfußes unabhängig vom Vorhandensein der Spritzgießeinheit entfernt und die Spritzgießeinheit jeweils auf eine Seite verschoben werden, die einen freien Zugang für das Wartungspersonal ermöglicht. Die nach Anspruch 8 vorgesehenen Schlitze ermöglichen dabei eine einfache Herstellung, da die zur Justierung erforderlichen Widerlager leicht von oben im Maschinenfuß befestigt werden können. Obwohl somit die Spritzgießeinheit beim Verschieben auf unbearbeiteten Maschinenoberflächen gleitet, ergibt sich eine reibungslosere Verschiebemöglichkeit.

Werden nach Anspruch 10 die die Antriebseinheit mit dem Schlitten verbindenden Tragelemente als zwei identische Gußkörper ausgebildet, die über Querschienen miteinander verbunden sind, können diese Gußkörper leichter hergestellt werden, da keine aufwendigen Gußformen erforderlich sind und bei Störungen leicht eines dieser Tragelemente ausgetauscht werden kann. Insbesondere wird bei den so geformten Tragelementen die Gefahr von Lunkern gegenüber den bisher bekannten U-förmigen Bügeln verringert.

Aber auch bei Wartungsarbeiten z.B. an der Förderschnecke oder am Plastifizierzylinder erlaubt die Auflage im hinteren Bereich bei einer Ausgestaltung nach den Ansprüchen 11-12 eine Verbesserung. Bevor die Kolbenstangen vom Muffenträger gelöst sind und nachdem die Spritzgießeinheit zurückgefahren ist, kann sie nämlich am Maschinenfuß abgestützt und abgesichert werden. Der Punkt, an dem die Abstützung erfolgt, dient als Schwenkpunkt für Drehbewegungen, die eine leichte Zugänglichkeit der Förderschnecke gewährleisten. Um insbesondere bei Ausbau von Förderschnecke und/oder Plastifizierzylinder ein Kippen der restlichen Spritzgießeinheit zu vermeiden, wird die Spritzgießeinheit über einen Hebel in dieser Stellung gesichert.

Weitere Vorteile ergeben sich aus den Unteransprüchen. Im folgenden wird die Erfindung anhand der Figuren näher erläutert. Es zeigen:
- Fig. 1: eine Seitenansicht eines Teils der Spritzgießmaschine, der auf den Formträger der Formschließeinheit und die Spritzgießeinheit beschränkt ist,
- Fig. 2: einen vergrößerten Ausschnitt von Fig. 1, auf dem die Tragkonstruktion dargestellt ist,
- Fig. 3: eine Draufsicht auf die Spritzgießmaschine gemäß Fig. 1, bei der zur besseren Klarheit der Darstellung die Spritzgießeinheit bis auf die Kolbenstangen 13a abgenommen ist,
- Fig. 4: eine Draufsicht auf die Spritzgießmaschine gemäß Fig. 1 in einer seitlich verschobenen Stellung der Spritzgießeinheit,
- Fig. 5: eine Darstellung gemäß Fig. 4, wobei die Spritzgießeinheit in ihre Mittelstellung verschoben ist und wobei die Kolbenstangen bereits zurückgefahren sind,
- Fig. 6: eine Darstellung gemäß Fig. 5 mit einer zu Wartungszwecken verschwenkten Spritzgießeinheit,
- Fig. 7, 8: einen vergrößerten Ausschnitt des Bereiches A von Fig. 1 in einer für die Verschwenkung unverriegelten bzw. verriegelten Stellung des Rastelements,
- Fig. 9: eine Seitenansicht im Bereich eines Auflagerpunktes der Kreuzschienen 23,
- Fig. 10: eine Draufsicht auf das Auflager gemäß Fig. 9, teilweise geschnitten gemäß Linie 10-10 von Fig. 9,
- Fig. 11, 12: eine Ansicht des Formträgers bei einem Schnitt nach den Linien 11-11 bzw. 12-12 von Fig. 3,
- Fig. 13: einen Schnitt durch die Darstellung gemäß Fig. 12 im Bereich einer durch die Spritzachse gelegten vertikalen Ebene,
- Fig. 14: eine Darstellung gemäß Fig. 12 in einer auf eine nichtzentrale Angußöffnung 30' verschobenen Stellung,
- Fig. 15: einen vergrößerten Ausschnitt von Fig. 12 im Bereich der Skalierung,
- Fig. 16, 17: Schnitte nach Linien 16-16 bzw. 17-17 von Fig. 15,
- Fig. 18, 19: eine den Fign. 12 bzw. 13 entsprechende Darstellung des Formträgers mit einer motorisch angetriebenen Verschiebeeinrichtung.

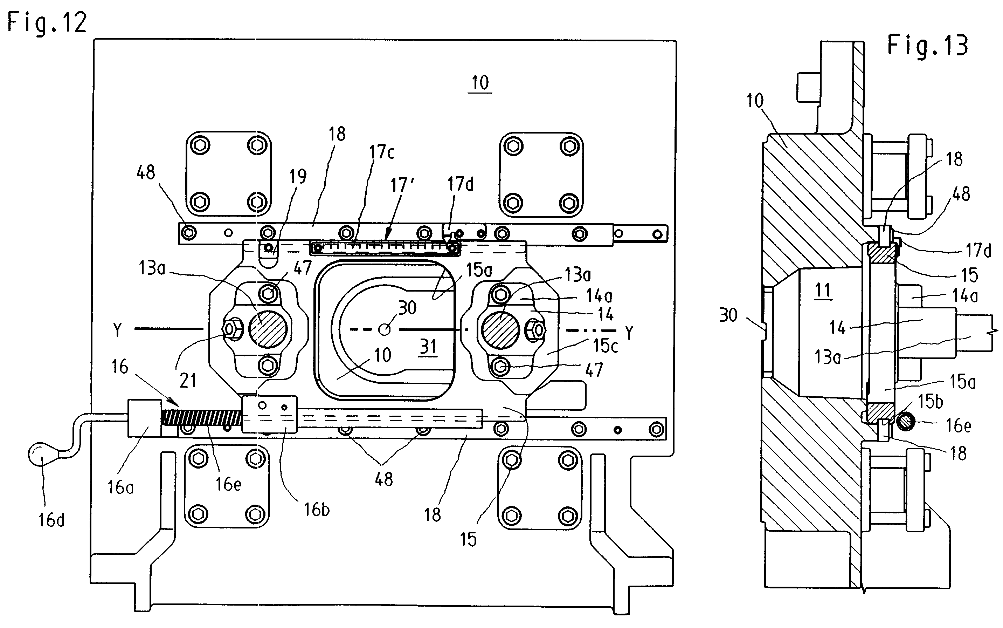

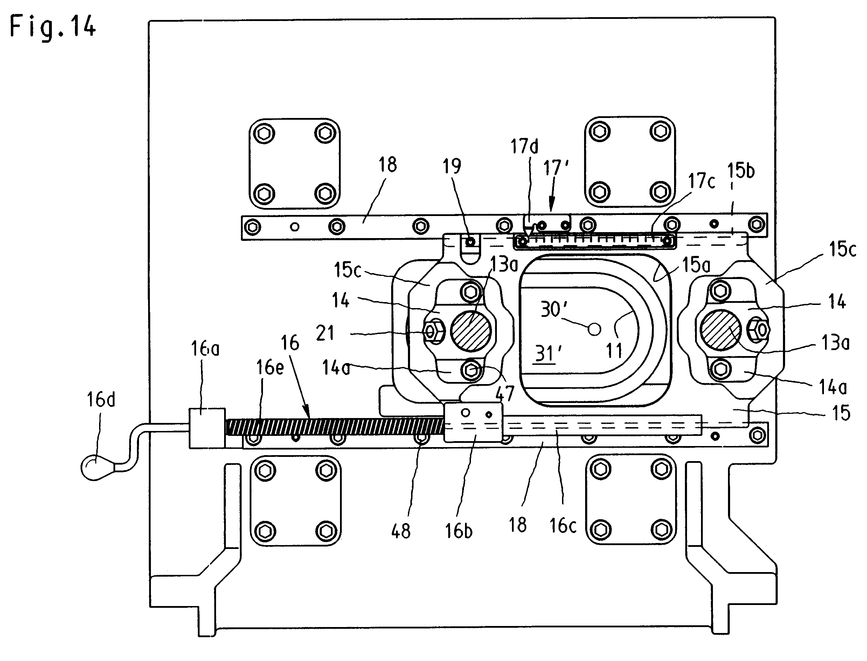

Der stationäre Formträger 10 ist Bestandteil der horizontal schließenden Formschließeinheit F einer Kunststoffspritzgießmaschine, die mit einer horizontal einspritzenden Spritzgießeinheit S versehen ist. Auf dem Formträger 10 ist eine erste Spritzgießform 31 (Fig. 12) mit zentraler Angußöffnung 30 und zentralem Formhohlraum 32 aufspannbar. Wahlweise sind auf den Formträger 10 verschiedene weitere Spritzgießformen 31' (Fig. 14) mit nichtzentraler Angußöffnung 30' und zentralem Formhohlraum 32' aufspannbar. In die Spritzgießformen 31, 31' kann plastifiziertes Kunststoffmaterial oder vergleichbares Material, das für die Herstellung von Teilen auf Kunststoff-Spritzgießmaschinen geeignet ist, wie z.B. keramisches Material durch eine mittels einer Verschiebeeinrichtung quer zu ihrer Spritzachse s-s in horizontaler Richtung verschiebbare Spritzgießeinheit S eingespritzt werden. Die Einspritzung erfolgt dabei nach einer parallelen Verschiebung der Spritzgießeinheit im Parallelanguß.

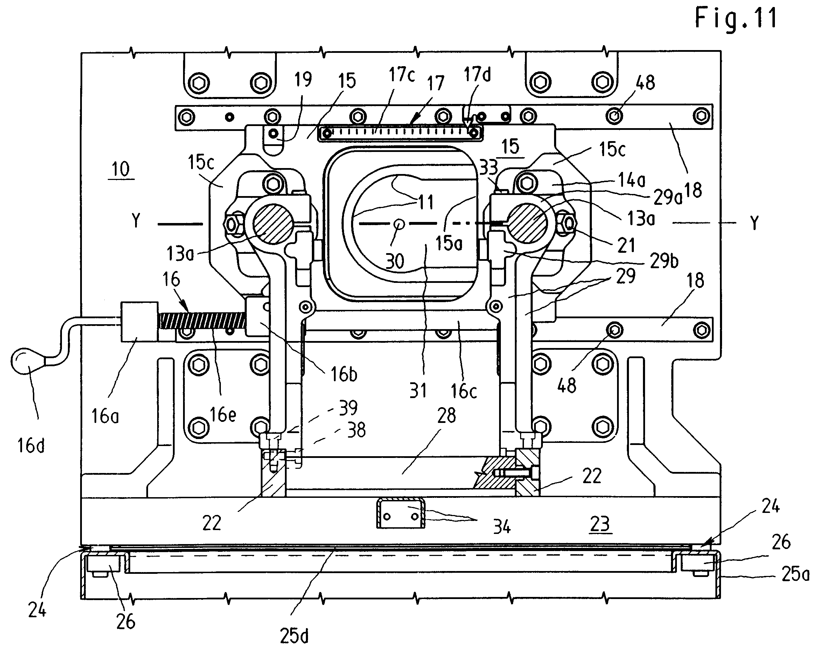

Der Formträger 10 weist eine, etwa symmetrisch zu seiner horizontalen Symmetrieebene y-y (Fig. 11) angeordnete, in Verschieberichtung vergrösserte Durchtrittsöffnung 11 für den Plastifizierzylinder 12 auf. Der Plastifizierzylinder ist mittels hydraulicher Antriebszylinder an die jeweils eingespannte Spritzgießform 31, 31' anlegbar. Als Antriebseinheit können jedoch auch andere Antriebe, wie elektromechanische oder pneumatische Antriebe eingesetzt werden. Die Kolbenstangen 13a der Antriebszylinder 13 erstrecken sich bis zum Formträger 10 und bilden Endbereiche der Antriebseinheit. Beim Verschieben der Spritzgießeinheit S sind die freien Enden 13b in Aufnahmen wenigstens eines in den Führungsorganen verschiebbaren Aufnahmenträgers aufgenommen. Als Aufnahmen werden dabei Muffen 14 verwendet. Der Aufnahmenträger wird im folgenden als Muffenträger 15 bezeichnet. Der Muffenträger 15 weist zwischen seinen als Muffen ausgebildeten Aufnahmen eine Ausnehmung 15a für den Durchtritt des Plastifizierzylinders auf. Über den Muffenträger 15 sind die Kolbenstangen in Führungsorganen des Formträgers 10 mittelbar geführt. Diese Führungsorgane liegen außerhalb der Durchtrittsöffnung 11, z. B. oberhalb und unterhalb der Durchtrittsöffnung. Der Muffenträger überträgt somit die während des Spritzbetriebs von den Kolbenstangen 13a übertragenen Kräfte über die Führungsorgane auf den Formträger 10. Wie aus Fig. 12 und 14 ersichtlich, überdeckt der Muffenträger 15 in seinen beiden extremen, einander entgegengesetzten Verschiebepositionen die Durchtrittsöffnung 11 je etwa hälftig. Während des Spritzbetriebs sind die Kolbenstangen axial in ihrer Position am Muffenträger 15 festgelegt.

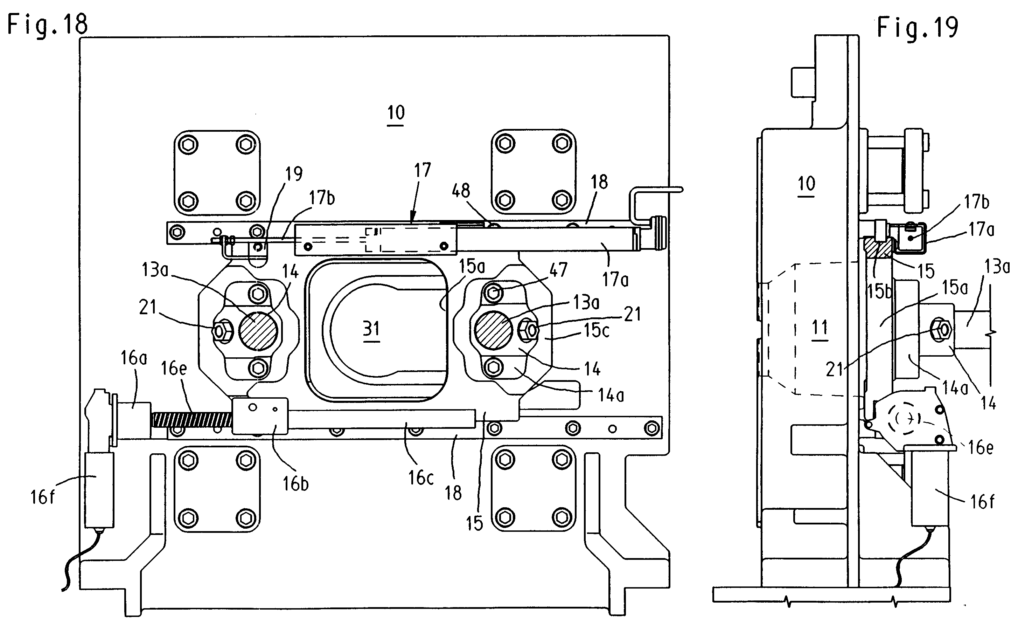

Die Verschiebung des Muffenträgers 15 erfolgt über eine Verschiebeeinrichtung, die im konkreten Ausführungsbeispiel als Spindeltrieb 16 ausgebildet ist, dessen stationärer Teil am Formträger und dessen beweglicher Teil am als Aufnahmenträger ausgebildeten Muffenträger 15 angeordnet ist. Andere Anordnungen der Verschiebeeinrichtung sind in diesem Bereich möglich, der Formträger, Muffenträger oder die Endbereiche der Antriebseinheit umfaßt. Im übrigen ist die Spritzgießeinheit zumindest in Verschieberichtung frei verschieblich auf dem Maschinenfuß abgestützt. Der Spindeltrieb kann entbeim weder wie beim Ausführungsbeispiel der Fign. 11-14 manuell über eine Kurbel 16d betätigt oder wie beim Ausführungsbeispiel der Fign. 18 und 19 über einen beispielsweise elektrisch oder hydraulisch betriebenen Motor 16f angetrieben werden. Das Spindeldrehlager 16a ist dabei am Formträger angeordnet, während die Mutter 16b dem Muffenträger 15 zugeordnet ist. Um. Schwierigkeiten, wie z. B. Verschmutzungen der Gewindespindel 16e vorzubeugen, ist diese im Bereich zwischen den beiden Kolbenstangen 13a durch eine Spindelhülse 16c geschützt.

Muffenträger 15 und Formträger 10 sind Wegmeßeinrichtungen zugeordnet, deren beweglicher Teil am Muffenträger 15 in Nachbarschaft der Führungsorgane und deren stationärer Teil am Formträger 10 an den Führungsorganen angeordnet ist. Die Maschine kann zunächst in einer Variante ausgeliefert werden, die für den nachträglichen Einsatz der Verschiebeeinrichtung bereits vorbereitet ist. Ganz nach den jeweiligen Bedürfnissen des Kunden kann eine Nachrüstung oder von vornherein eine Auslieferung mit dem motorisch betätigten Spindeltrieb erfolgen. Erfolgt eine motorische Verschiebung, so wird als Wegmeßeinrichtung 17 ein Linearpotentiometer vorgesehen, dessen Gehäuse 17a am Formträger 10 befestigt ist und dessen Schleifkontaktträger 17b mit dem Muffenträger verbunden ist. Die Wegmeßeinrichtung 17 liefert dabei einer Steuereinrichtung Signale, wie weit bereits die Spritzgießeinheit verschoben ist, so daß durch einen Soll-Ist-Wert-Vergleich eine genaue Einstellung der Spritzgießmaschine erfolgen kann. Bei manueller Verschiebung genügt als Wegmeßeinrichtung 17' eine Skalierung 17c am Muffenträger und ein Zeiger 17d an der als Führungsorgan ausgebildeten Führungsschiene 18.

Um eine Verschiebung möglichst über den gesamten gewünschten Bereich zu verwiklichen, erstreckt sich die Führungsschiene 18 nahezu über die gesamte Breite des Formträgers. Die Führungsschiene 18 ist mittels Bolzen 48 unmittelbar mit einer Anformung 10a des Formträgers 10 verbunden. Die Kolbenstangen 13a liegen in der horizontalen Symmetrieebene y-y des Formträgers 10 und sind in den Führungsschienen 18 über nahezu die gesamte Breite des Formträgers, zumindest aber im Bereich der Muffen 14 geführt. Durch die Vielzahl der die Führungsschienen 18 befestigenden Bolzen 48 wird in jeder Stellung der Spritzgießeinheit eine weitgehend identische Kräfteeinleitung verwirklicht.

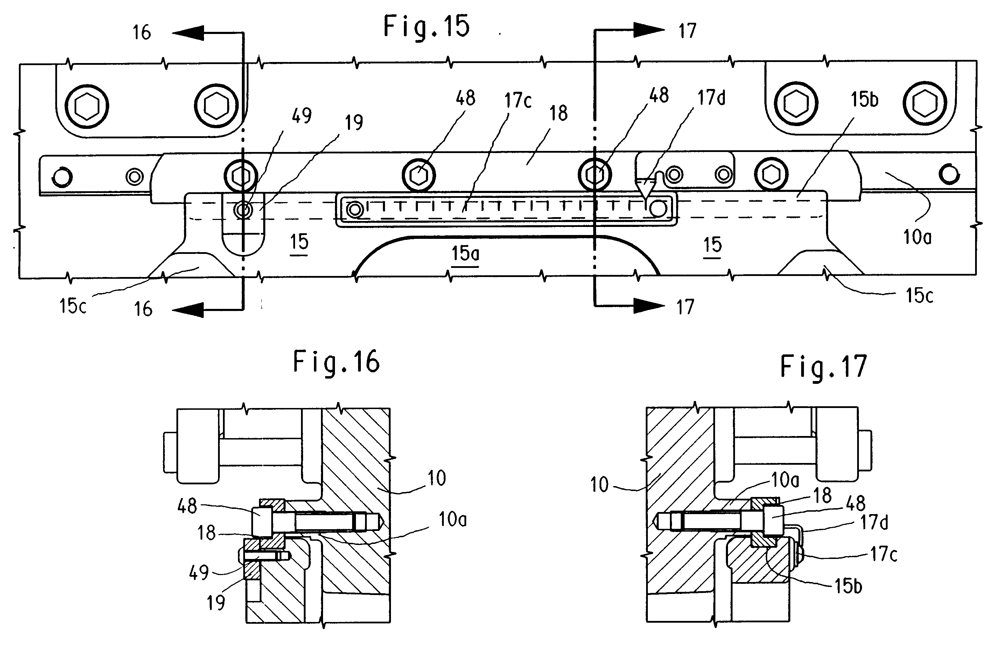

Der Muffenträger besitzt oben und unten eine Führungsnut 15b, in die die Führungsschiene 18 eintaucht. Der beim Verschieben mit Spiel verschiebbare Muffenträger 15 kann durch wenigstens ein Spannelement 19 (Fig. 11) an der Führungsschiene 18 festgelegt werden. Beim Einspritzen des Materials in den Formhohlraum 32 führt der entstehende Anlagedruck des Plastifizierzylinders 12 zu einer entgegengesetzten Zugkraft in den Kolbenstangen, die über die formseitige Wandung der Nut 15b (Fig. 17) des Muffenträgers 15 auf die formseitige Wandung der Führungsschiene 18 großflächig übertragen wird. Bei Verspannung mittels Spannelement 19 wird der Muffenträger 15 bereits durch den Spannbolzen 49 in Richtung der Zugkraft gezogen. Diese Spannkraft ist jedoch geringer als die beim Einspritzen entstehende Zugkraft. Aufgrund der Anordnung des Spannbolzens auf der vom Formträger abgewandten Seite wird dieser jedoch nicht der vollen Zugkraft unterworfen. Stattdessen wird beim Einspritzen die Spannkraft im Spannbolzen 49 verringert.

Am Muffenträger 15 selbst sind die als Endbereiche der Antriebseinheit ausgebildeten Kolbenstangen 13a in den Muffen durch Spannbolzen 21 gehalten, die an den Spannflächen 13c der Kolbenstangen angreifen. Die Muffen sind entweder am Muffenträger 15 unmittelbar angeformt oder über Muffenelemente 14a am Muffenträger befestigt. Die Muffenelemente 14a sind dabei über Spannbolzen 47 mit dem Muffenträger 15 verbunden. Verschiedene Paare von Muffenelementen mit angeformten Muffen können alternativ auf den plangeschliffenen Spannflächen 15c des Muffenträgers 15 aufgespannt werden. Die einzelnen Muffenelemente 14a unterscheiden sich durch einen unterschiedlichen gegenseitigen Abstand und/oder eine unterschiedliche lichte Weite ihrer Muffen. Dadurch können verschiedenste Spritzgießeinheiten an dem Muffenträger befestigt werden. Wie im Stand der Technik bekannt, können auch zwei Muffenträger vorgezusehen werden, die jeweils nur eine Kolbenstange aufnehmen.

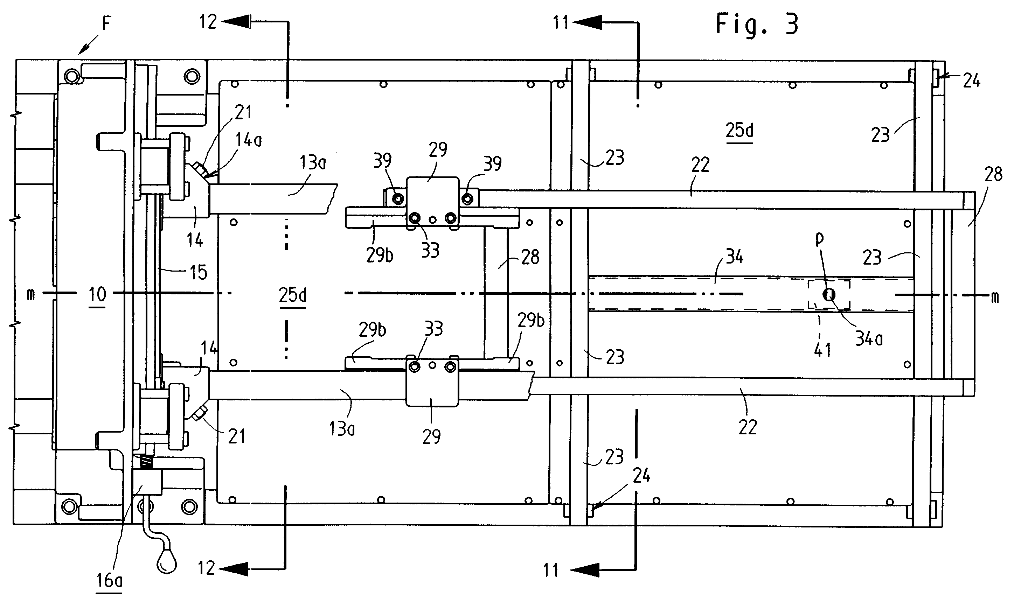

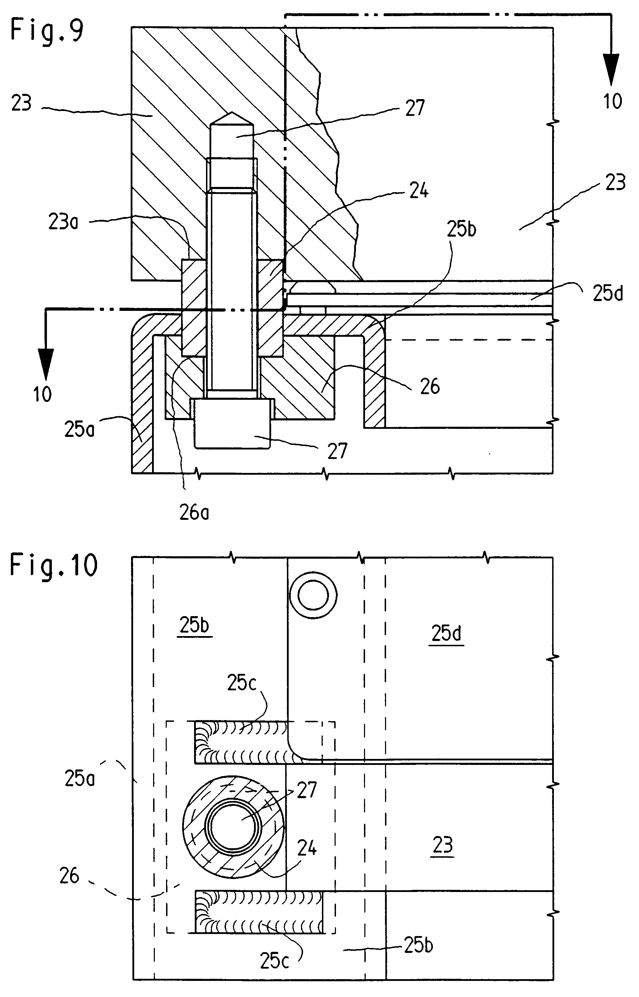

Die freie Verschiebbarkeit der Spritzgießeinheit in vom Formträger abgewandten Bereich erfolgt dadurch, daß die Spritzgießeinheit beim Verschieben mittels einem sie tragenden, in Spritzrichtung angeordneten Schienenpaar 22 auf quer zur Spritzachse angeordneten Schienen gleitet. Diese Schienen werden aufgrund ihrer kreuzförmigen Anordnung, wie sie sich insbesondere aus der Draufsicht gemäß Fig. 3 ergibt, im folgenden als Kreuzschienen bezeichnet. Die beiden Kreuzschienen 23 sind auf vier fein bearbeiteten Auflagern am Maschinenfuß 25 abgestützt und überbrücken im übrigen den gesamten Maschinenfuß (Fig. 11). Die Ausbildung eines solchen Auflagerbereiches ergibt sich aus den Fign. 9, 10. Grundsätzlich befindet sich das Auflager 24 für die Kreuzschienen nach den Fign. 10, 11 am umgebördelten Längsrand 25b der Seitenwände 25a des Maschinenfußes 25. Am Längsrand 25b sind an jedem Auflager zwei Schlitze 25c vorgesehen, über die ein Widerlagerblock 26 am Maschinenfuß von oben angeschweißt werden kann. Dieser Widerlagerblock 26 dient einer zentrierten Schraube 27 als Widerlager. Zwischen den beiden Schlitzen 25c ist eine Öffnung vorgesehen, die die Schraube 27 und ein als Auflager 24 dienendes Zentrierstück koaxial aufnimmt. Das Zentrierstück ist sowohl am Widerlagerblock als auch an der Kreuzschiene 23 jeweils in Ausnehmungen 23a, 26a gelagert. Da an diesen Auflagerpunkten auch eine Justierung der Kreuzschienen 23 erfolgen kann, um von der Aufstellgenauigkeit und der Steifheit des Maschinenfußes 25 unabhängig zu sein, kann die Schraube 27 grundsätzlich auch als Justierschraube ausgebildet sein. In diesem Fall ist die Schraube 27 von unten zugänglich, und bedarfsweise können auch Durchgriffsöffnungen im Maschinenfuß vorgesehen werden, um eine Zugänglichkeit der Schraube zu erleichtern. Die Kreuzschienen 23 können aber auch vom Hersteller mit dem Maschinenfuß so verbunden werden, daß sie sich beim Einrichten des Maschinenfußes vor Ort selbstständig einrichten.

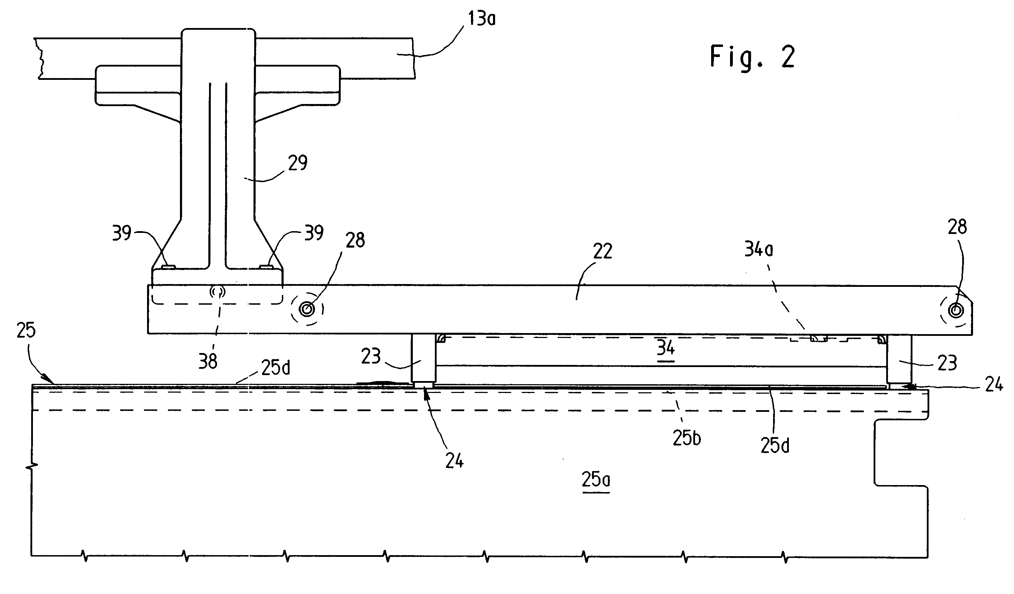

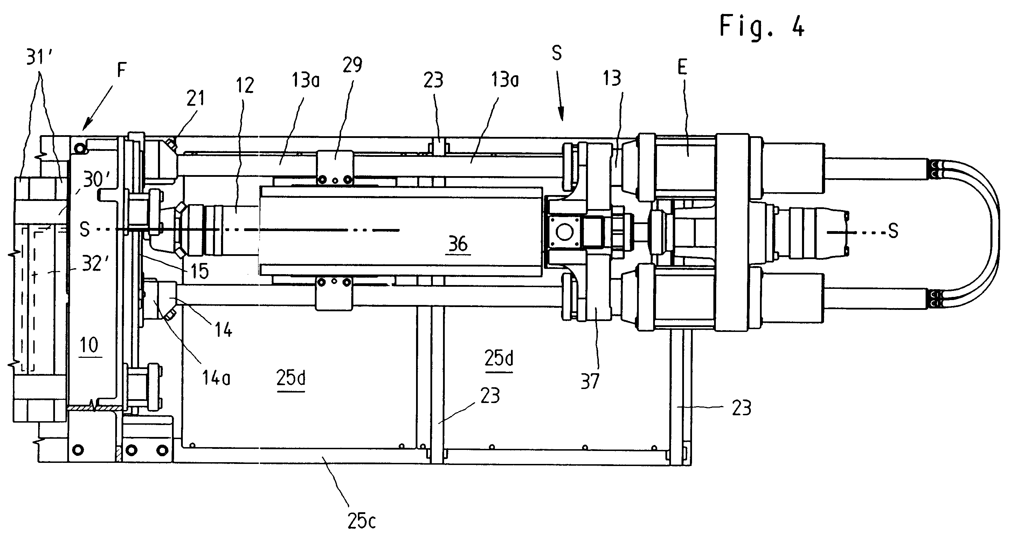

Wie sich aus den Darstellungen gemäß Fig. 2 und 3 ergibt, wird die gesamte Spritzgießeinheit von einem Schienenpaar 22 getragen, das über zwei Querstangen 28 zu einem Schlitten verbunden ist. Stirnseitig trägt dieser Schlitten Tragelemente 29 für die Antriebszylinder 13. Wie sich aus Fig. 11 ergibt, sind die Tragelemente über Verbindungsbolzen 38, 39 mit dem Schienenpaar 22 verbunden. Bei den Tragelementen handelt es sich um zwei identische Tragelemente von denen jeweils eines jeweils einer Kolbenstange 13a des Antriebszylinders 13 zugeordnet ist. In Fig. 4 sind die beiden Tragelemente spiegelsymmetrisch zu einer durch die Spritzachse s-s gehenden vertikalen Ebene angeordnet. Es handelt sich um Gußkörper, die im Bereich der Kolbenstangen 13a als radial gespaltene Spannmuffen 29a (Fig. 11) ausgebildet sind und mittels die Spaltfugen durchsetzende Spannbolzen 33 mit einem Spannstück 29b zur Verklemmung der Kolbenstangen 13a verbunden sind.

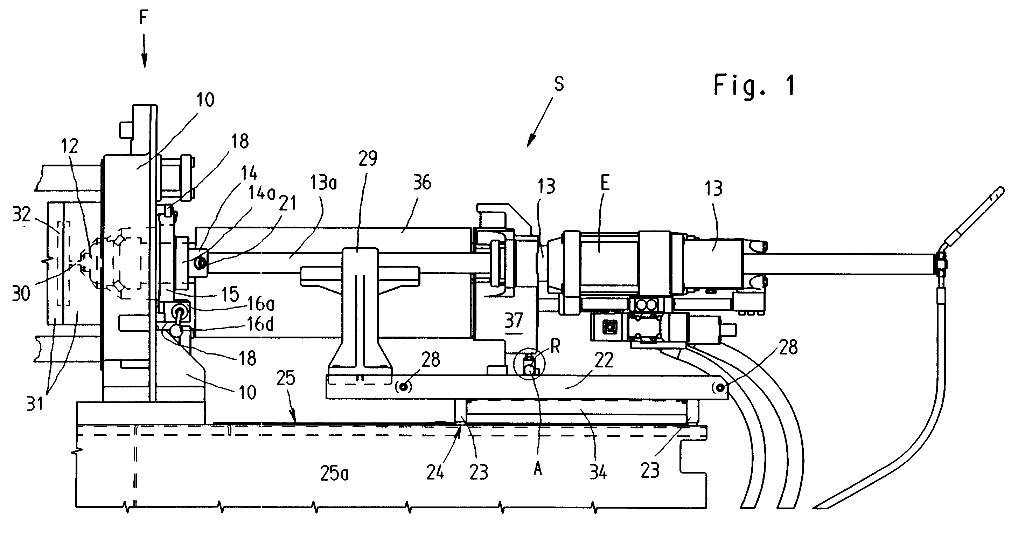

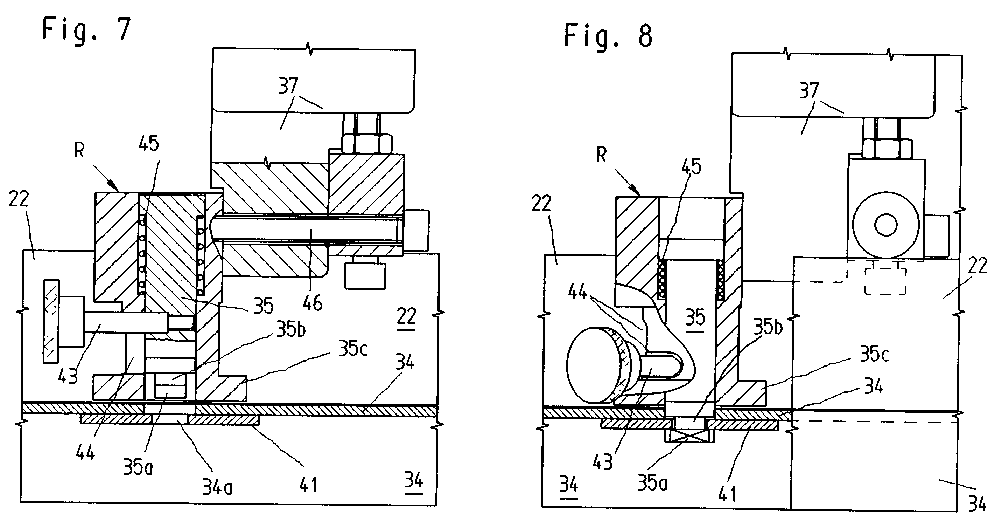

Die Kreuzschienen 23 sind über eine Stützschiene 34 miteinander verbunden, die eine Rastöffnung 34a besitzt, in der die Spritzgießeinheit S mittels einer Rasteinrichtung R verrastbar ist. Diese Rasteinrichtung R ist als vergrößerter Teilbereich A von Fig. 1 in den Fign. 7 und 8 dargestellt. Im Bereich der Rastöffnung ist eine Gegenplatte 41 angeordnet, die eine rechteckige Öffnung aufweist, in die ein Rastelement 35 eintaucht. Das Rastelement 35 besitzt ein Rechteckelement 35a und einen Hintergriff 35b. Über einen Hebel 43 kann das Rastelement 35 gegen die Kraft einer Feder 45 in einem Schlitz 44 zunächst vertikal bewegt und dann horizontal gedreht werden. In der unverriegelten Stellung gemäß Fig. 7 erstreckt sich der Hebel 43 quer zur Spritzachse. Das Rastelement besitzt ein Rechteckelement 35a sowie einen Hintergriff 35b. Bei der vertikalen Bewegung des Hebels 43 stimmt die Querschnittsform des Rechteckelements 35a mit der Rastöffnung 34a hinsichtlich der Querschnittsform überein. Bei der anschließend erfolgenden Drehbewegung, deren Endzustand in Fig. 8 dargestellt ist, wird das Rechteckelement 35a unter die Gegenplatte 41 gedreht, was zu einem Verrasten des Hintergriffs 35b mit der Gegenplatte 41 führt. Das Rastelement 35 taucht oberhalb des Hintergriffs 35b in die Rastöffnung 34a bis nahezu zum Anliegen an die Gegenplatte 41 ein. Die Rasteinrichtung R stützt sich über den Auflagebereich 35c an der Stützschiene 34 ab. Gemäß Fig. 7 kann die gesamte Rasteinrichtung nachträglich mittels Bolzen 46 am Tragkörper 37 befestigt und auf Wunsch des Kunden nachgerüstet werden.

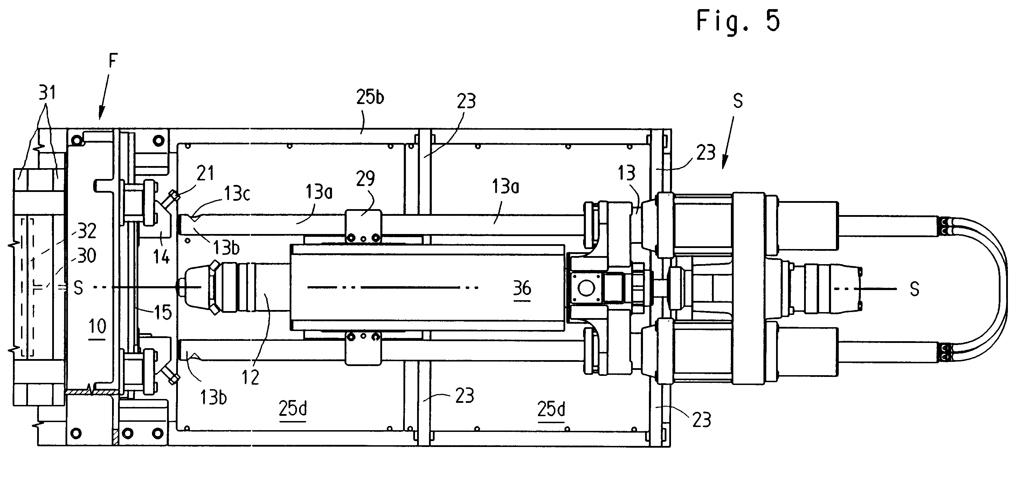

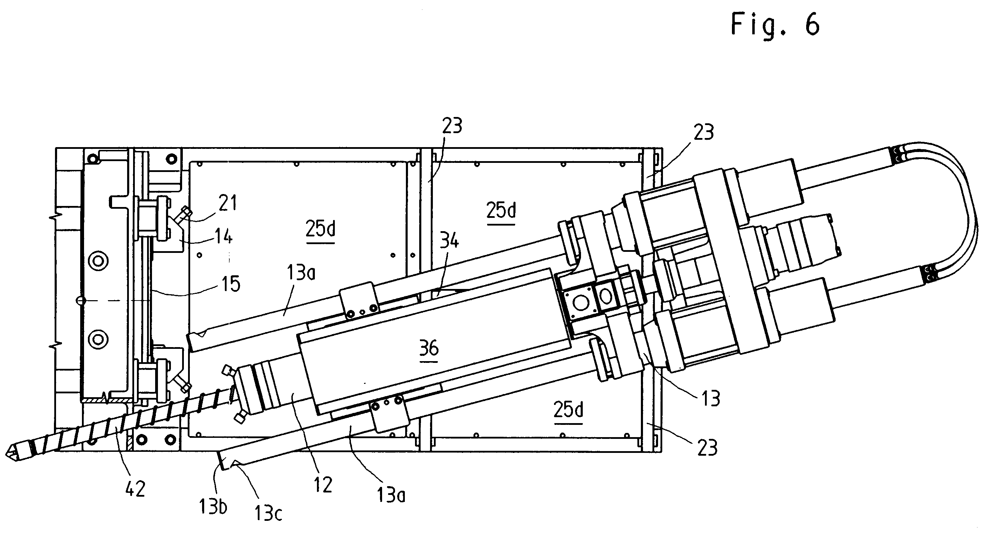

Zur Verrastung wird die Spritzgießeinheit bis zur "Indexierung" zurückgefahren, bis eine Überdeckung zwischen Rechteckelement 35a und Rastöffnung 34a eintritt. Nach der Verrastung werden die Kolbenstangen 13a vom Muffenträger an den Spannbolzen 21 gelöst. Durch den sonst das Vorfahren bewirkenden Vorgang werden die Kolbenstangen zurückgefahren (Fig. 5). In der indexierten Stellung ist gefahrlos eine Verschwenkung der Spritzgießeinheit auf den Kreuzschienen 23 wie in Fig. 6 dargestellt möglich, um beispielsweise die Förderschnecke 42 zu Reinigungszwecken aus dem Plastifizierzylinder herauszuziehen. Bei dieser Verschwenkung befindet sich der im Bereich des Tragkörpers 37 liegende Schwerpunkt ungefähr über dem von der Rasteinrichtung R vorgegebenen Schwenkpunkt P. Die Rastöffnung 34a ihrerseits befindet sich aber aufgrund der Anordnung der Stützschiene 34 ebenfalls ungefähr mittig in der Symmetrieebene m-m der Spritzgießmaschine.

Trotz allem sind die Innenräume des Maschinenfußes 25 über die Abdeckplatten 25d, wie aus den Fign. 2, 9, 11 ersichtlich, jederzeit zugänglich, da die Abdeckplatten 25d unter den Kreuzschienen bedarfsweise herausgezogen werden können. Je nachdem auf welcher Seite der Spritzgießmaschine eine Wartung im Innenraum des Maschinenfußes erforderlich ist, kann die Spritzgießeinheit so verschoben werden, daß eine freie Zugänglichkeit ohne Behinderung durch die Spritzgießeinheit S möglich ist. Schließlich ergibt sich aus Fig. 1 auch der generelle Aufbau der Spritzgießeinheit. Der Plastifizierzylinder ist von einem Schutzgehäuse 36 umgeben und die Einspritzzylinder E liegen koaxial mit den Antriebszylindern 13, wie dies aus der älteren Patentanmeldung 41 42 927 bekannt ist, deren Offenbarungsgehalt hiermit ausdrücklich zum Gegenstand auch der vorliegenden Anmeldung gemacht wird. Gerade dieser Aufbau des Spritzaggregates ermöglicht nämlich in Verbindung mit dem entsprechend dimensionierten Muffenträger auch das Aufbringen hoher Kräfte, wie sie aufgrund der ständig wachsenden Anforderungen an die Eigenschaften der Materialien heute und in Zukunft immer mehr erforderlich sind.

## Patentansprüche

1. Kunststoff-Spritzgießmaschine mit einer Formschließeinheit (F) und einer horizontal einspritzenden Spritzgießeinheit (S), die bedarfsweise mittels einer Verschiebeeinrichtung quer zu ihrer Spritzachse (s-s) auf die jeweiligen Angußöffnungen (30, 30') von am stationären Formträger (10) der Formschließeinheit (F) aufspannbaren ersten Spritzgießformen (31) mit zentraler Angußöffnung (30)
und wahlweise von weiteren Spritzgießformen (31') mit nichtzentraler Angußöffnung (30') verschiebbar ist, in die plastifiziertes Material im Parallelanguß einspritzbar ist, wobei der Formträger (10) eine in Verschieberichtung vergrößerte Durchtrittsöffnung (11) für den Plastifizierzylinder (12) der durch wenigstens eine Antriebseinheit an die Spritzgießform (31, 31') anlegbaren Spritzgießeinheit (S) aufweist, sowie mit Führungsorganen für sich bis zum Formträger (10) ersteckende und beim Verschieben der Spritzgießeinheit (S) in Verschieberichtung geführte Endbereiche der Antriebseinheit, deren freie Enden (13b) in Aufnahmen wenigstens eines in den Führungsorganen verschiebbaren Aufnahmenträgers aufgenommen sind, der Raum für den Durchtritt des Plastifizierzylinders (12) aufweist,
dadurch gekennzeichnet, daß die Verschiebeeinrichtung am Formträger (10) und im Bereich des Aufnahmeträgers angreift und daß die Spritzgießeinheit (S) zumindest in Verschieberichtung frei verschieblich ist.

2. Spritzgießmaschine nach Anspruch 1, dadurch gekennzeichnet, daß als Verschiebeeinrichtung für die Spritzgießeinheit (S) ein Spindeltrieb (16) vorgesehen ist, dessen stationäres Spindeldrehlager am Formträger (10) und dessen Kugelrollmutter als bewegliches Teil der Verschiebeeinrichtung am als Aufnahmenträger ausgebildeten Muffenträger (15) vorgesehen ist.

3. Spritzgießmaschine nach Anspruch 1 oder 2, dadurch gekennzeichnet, daß einem als Aufnahmeträger ausgebildeten Muffenträger (15) und dem Formträger (10) eine Wegmeßeinrichtung (17, 17') zugeordnet ist, deren beweglicher Teil am Muffenträger (15) in Nachbarschaft der Führungsorgane und deren stationärer Teil am Formträger (10) an den Führungsorganen angeordnet ist.

4. Spritzgießmaschine nach einem der vorhergehenden Ansprüche, dadurch gekennzeichnet, daß die Endbereiche durch Kolbenstangen (13a) von als Antriebseinheit ausgebildeten, in der horizontalen Symmetrieebene (y-y) des Formträgers (10) angeordneten, hydraulischen Antriebszylindern (13) gebildet sind und in als Führungsorgan ausgebildeten und am Formträger (10) befestigten Führungsschienen (18) über nahezu die gesamte Breite des Formträgers wenigstens im Bereich der als Aufnahmen ausgebildeten Muffen (14) geführt ist und daß Mittel zum axialen Fest legen der Kolbenstangen (13a) in ihrer jeweiligen Position vorgesehen sind.

5. Spritzgießmaschine nach einem der vorhergehenden Ansprüche, dadurch gekennzeichnet, daß der Aufnahmenträger oben und unten eine Führungsnut (15b) aufweist, in die die Führungsschiene (18) eintaucht, und daß der beim Verschieben mit Spiel verschiebbare Aufnahmenträger (15) durch Spannelemente (19) an der Führungsschiene (18) festlegbar ist und in Richtung der Spritzachse (s-s) in seiner Position durch Verspannung mit den Führungsschienen (18) auf der vom Spannelement (19) abgewandten Seite der Führungsschiene (18) arretierbar ist.

6. Spritzgießmaschine nach einem der vorhergehenden Ansprüche, dadurch gekennzeichnet, daß ein erstes Paar von Muffenelementen (14a) mit angeformten Muffen (14) und wenigstens ein weiteres Paar von Muffenelementen mit angeformten Muffen alternativ auf plangeschliffene Spannflächen (15c) des Muffenträgers (15) mittels Spannbolzen (21) aufspannbar sind, wobei die Muffenelemente (14a) der beiden Paare sich durch unterschiedlichen gegenseitigen Abstand und/oder unterschiedliche lichte Weite ihrer Muffen voneinander unterscheiden.

7. Spritzgießmaschine nach einem der vorhergehenden Ansprüche, dadurch gekennzeichnet, daß beim Verschieben ein die Spritzgießeinheit (S) tragendes, in Spritzrichtung angeordnetes Schienenpaar (22) auf quer zur Spritzachse angeordneten Schienen (Kreuzschienen 23) gleitet, die auf fein bearbeiteten Auflagern (24) am Maschinenfuß abgestützt sind.

8. Spritzgießmaschine nach Anspruch 7, dadurch gekennzeichnet, daß die Auflager (24) am umgebördelten Längsrand (25b) der Seitenwände (25a) des Maschinenfußes (25) ausgebildet sind, in dem unter dem Längsrand (25b) ein Widerlagerblock (26) durch zwei Schlitze (25c) von oben angeschweißt ist, der einer am Widerlagerblock (26) zentrierten Schraube (27) für die Kreuzschienen (23) als Widerlager dient, die als Justierschraube ausgebildet ist.

9. Spritzgießmaschine nach Anspruch 7 oder 8, dadurch gekennzeichnet, daß das Schienenpaar (22) über zwei Querstangen (28) zu einem Schlitten verbunden ist, der stirnseitig Tragelemente (29) für die Antriebseineinheit trägt.

10. Spritzgießmaschine nach Anspruch 9, dadurch gekennzeichnet, daß die Tragelemente (29) aus zwei identischen, spiegelsymmetrisch zu einer durch die Spritzachse (s-s) gehenden vertikalen Ebene angeordneten Gußkörpern gebildet sind, die im Bereich der Endbereiche der Antriebseinheit als radialgespaltene Spannmuffen (29a) ausgebildet sind und mittels die Spaltfugen durchsetzender Spannbolzen (33) mit den Endbereichen verklemmbar sind.

11. Spritzgießmaschine nach einem der Ansprüche 7-10, dadurch gekennzeichnet, daß die Kreuzschienen (23) über eine Stützschiene (34) miteinander verbunden sind, die eine Rastöffnung (34a) besitzt, in der die Spritzgießeinheit (S) verrastbar ist.

12. Spritzgießmaschine nach Anspruch 11, dadurch gekennzeichnet, daß die in der Symmetrieebene (m-m) der Spritzgießmaschine angeordnete Stützschiene (34) in der Rastöffnung (34a) ein Rastelement (35) der zurückgefahrenen Spritzgießeinheit (S) aufnimmt und daß die Rastöffnung als Schwenkpunkt (P) für eine Verschwenkung der Spritzgießeinheit (S) dient und daß nach erfolgter Verrastung die von den Muffen (14) gelösten Kolbenstangen (13a) der Antriebszylinder zurückziehbar sind.

## Claims

1. Plastics material injection moulding machine, including a mould closing unit (F) and a horizontally injecting injection moulding unit (S), which is displaceable, as required, by means of a displacement device transversely relative to its injection axis (s-s) over the respective sprue openings (30, 30') of first injection moulds (31), which are clampable on the stationary mould carrier (10) of the mould closing unit (F) and have a central sprue opening (30), and selectively of additional injection moulds (31') having a non-central sprue opening (30'), into which plasticised material in the parallel sprue is injectable, the mould carrier (10) having an opening (11) for the plasticising cylinder (12) of the injection moulding unit (S), which is attachable to the injection mould (31, 31') by at least one drive unit, said opening being enlarged when viewed with respect to the direction of displacement, and the plastics material injection moulding machine also including guide means for end regions of the drive unit, which end regions extend to the mould carrier (10) and are guided in the direction of displacement during the displacement of the injection moulding unit (S), the free ends (13b) of said end regions being accommodated in receivers of at least one receiver carrier, which is displaceable in the guide means and has space for the plasticising cylinder (12) to pass therethrough, characterised in that the displacement device co-operates with the mould carrier (10) and in the region of the receiver carrier, and in that the injection moulding unit (S) is freely displaceable at least in the direction of displacement.

2. Injection moulding machine according to claim 1, characterised in that a spindle drive (16) is provided as the displacement device for the injection moulding unit (S), the stationary spindle pivot bearing of said spindle drive being provided on the mould carrier (10), and the ball rolling nut of said spindle drive being provided as a movable part of the displacement device on the bushing support (15), which is configured as a receiver carrier.

3. Injection moulding machine according to claim 1 or 2, characterised in that a distance measuring device (17, 17') is associated with a bushing support (15), configured as a receiver carrier, and with the mould carrier (10), the movable part of said distance measuring device being disposed on the bushing support (15) in the vicinity of the guide means, and the stationary part of said distance measuring device being disposed on the mould carrier (10) on the guide means.

4. Injection moulding machine according to one of the preceding claims, characterised in that the end regions are formed by piston rods (13a) of hydraulic drive cylinders (13), which are configured as a drive unit and are disposed in the horizontal plane of symmetry (y-y) of the mould carrier (10), and are guided in guide bars (18), which are configured as a guide means and mounted on the mould carrier (10), over virtually the entire width of the mould carrier, at least in the region of the bushings (14), which are configured as receivers, and in that means are provided for the axial securement of the piston rods (13a) in their respective positions.

5. Injection moulding machine according to one of the preceding claims, characterised in that the receiver carrier has a guide groove (15b) at its upper and lower ends, and the guide bar (18) drops into said groove, and in that the receiver carrier (15), which is displaceable with some clearance during the displacement movement, is securable on the guide bar (18) by means of clamping elements (19) and is securable in its position in the direction of the injection axis (s-s) by being clamped to the guide bars (18) on the side of the guide bar (18) remote from the clamping element (19).

6. Injection moulding machine according to one of the preceding claims, characterised in that a first pair of bushing elements (14a), provided with bushings (14) formed to fit thereon, and at least an additional pair of bushing elements, provided with bushings formed to fit thereon, are alternatively clampable onto surface-ground clamping faces (15c) of the bushing support (15) by means of clamping bolts (21), the bushing elements (14a) of the two pairs differing from one another because their bushings have different spacings therebetween and/or have a different inside width.

7. Injection moulding machine according to one of the preceding claims, characterised in that, during the displacement movement, a pair of rods (22), which carries the injection moulding unit (S) and is disposed in the injection direction, slides on bars (cross-bars 23), which are disposed transversely relative to the injection axis and are supported on the machine base on finely machined bearings (24).

8. Injection moulding machine according to claim 7, characterised in that the bearings (24) are provided on the flanged longitudinal edge (25b) of the lateral walls (25a) of the machine base (25), in which an abutment block (26) is welded from above beneath the longitudinal edge (25b) through two slots (25c), which block serves as an abutment for a screw (27), which is centred on the abutment block (26), for the cross-bars (23), and said screw is configured as an adjustment screw.

9. Injection moulding machine according to claim 7 or 8, characterised in that the pair of rods (22) is connected by two cross-bars (28) to form a slide which has, on its end face, supporting members (29) for the drive unit (13).

10. Injection moulding machine according to claim 9, characterised in that the supporting members (29) are formed from two identical castings, which are disposed in a mirror-symmetrical manner relative to a vertical plane extending through the injection axis (s-s), said castings being configured as radially split tensioning bushings (29a) in the region of the end regions of the drive unit and being clampable to the end regions by means of clamping bolts (33) traversing the split joints.

11. Injection moulding machine according to one of claims 7-10, characterised in that the cross-bars (23) are interconnected via a supporting bar (34), which has a locking aperture (34a) in which the injection moulding unit (S) is lockable.

12. Injection moulding machine according to claim 11, characterised in that the supporting bar (34), disposed in the plane of symmetry (m-m) of the injection moulding machine, accommodates in the locking aperture (34a) a locking element (35) of the returned injection moulding unit (S), and in that the locking aperture serves as a pivot point (P) for a pivotal movement of the injection moulding unit (S), and in that, once the locking has been effected, the piston rods (13a) of the drive cylinders released from the bushings (14) are withdrawable.

## Revendications

1. Machine de moulage de matière plastique par injection, comprenant une unité de fermeture du moule (F) et une unité de moulage par injection (S) qui injecte horizontalement et qui, au moyen d'un dispositif de déplacement, peut être déplacée, si besoin en est, transversalement par rapport à son axe d'injection (s-s) jusque sur les ouvertures d'injection respectives (30, 30') de premiers moules de moulage par injection (31) à ouverture d'injection centrale (30) qui peuvent être serrés sur le porte-moule fixe (10) de l'unité de fermeture du moule (F) et, au choix, sur celles d'autres moules de moulage par injection (31') dont l'ouverture d'injection (30') n'est pas centrale, dans laquelle de la matière plastique ramollie peut être injectée en injection parallèle, cependant que le porte-moule (10) présente une ouverture de passage (11) qui est agrandie dans la direction du déplacement et qui est destinée au cylindre de ramollissement (12) de l'unité de moulage par injection (S), celle-ci pouvant être posée sur le moule de moulage par injection (31, 31') par au moins une unité d'entraînement, et comprenant aussi des organes de guidage destinés à des zones d'extrémité de l'unité d'entraînement qui s'étendent jusqu'au porte-moule (10), qui sont guidées dans la direction de déplacement lors du déplacement de l'unité de moulage par injection (S) et dont les extrémités libres (13b) sont reçues dans des logements d'au moins un support de logements, celui-ci pouvant être déplacé dans les organes de guidage et présentant un espace destiné au passage du cylindre de ramollissement (12), caractérisée par le fait que le dispositif de déplacement vient en prise sur le porte-moule (10) et dans la région du support de logements, et par le fait que l'unité de moulage par injection (S) peut être déplacée librement, du moins dans la direction du déplacement.

2. Machine de moulage par injection selon la revendication 1, caractérisée par le fait qu'il est prévu comme dispositif de déplacement destiné à l'unité de moulage par injection (S) un mécanisme à broche (16) dont le palier fixe de la broche est prévu sur le porte-moule (10) et dont l'écrou à billes est prévu, pour servir de partie mobile du dispositif de déplacement, sur le porte-manchons (15) qui est réalisé sous la forme d'un support de logements.

3. Machine de moulage par injection selon la revendication 1 ou 2, caractérisée par le fait qu'à un porte-manchons (15) qui est réalisé sous la forme d'un support de logements et au porte-moule (10) est associé un dispositif de mesure des déplacements (17, 17') dont la partie mobile est disposée sur le porte-manchons (15) au voisinage des organes de guidage et dont la partie fixe est disposée sur le porte-moule (10) sur les organes de guidage.

4. Machine de moulage par injection selon l'une des revendications précédentes, caractérisée par le fait que les zones d'extrémité sont constituées par des tiges de piston (13a) de vérins hydrauliques d'entraînement (13) qui sont réalisés sous la forme d'une unité d'entraînement et qui sont disposés dans le plan de symétrie horizontal (y-y) du porte-moule (10), et qu'elles sont guidées dans des rails de guidage (18) réalisés sous la forme d'un organe de guidage et fixés au porte-moule (10), presque sur la totalité de la largeur du porte-moule et du moins dans la région des manchons (14) qui sont réalisés sous la forme de logements, et par le fait qu'il est prévu des moyens pour fixer axialement les tiges de piston (13a) dans leurs positions respectives.

5. Machine de moulage par injection selon l'une des revendications précédentes, caractérisée par le fait que le support de logements présente à ses parties supérieure et inférieure une rainure de guidage (15b) dans laquelle pénètre le rail de guidage (18), et par le fait que le support de logements (15) qui peut être déplacé avec un jeu lors du déplacement peut être fixé au rail de guidage (18) par des éléments de serrage (19), et qu'il peut être bloqué dans sa position dans la direction de l'axe d'injection (s-s) par serrage sur les rails de guidage (18) sur le côté du rail de guidage (18) qui est opposé à l'élément de serrage (19).

6. Machine de moulage par injection selon l'une des revendications précédentes, caractérisée par le fait qu'une première paire d'éléments de manchons (14a) sur lesquels sont formés des manchons (14) et au moins une autre paire d'éléments de manchons sur lesquels sont formés des manchons peuvent être serrées en variante sur des surfaces de serrage planes et polies (15c) du porte-manchons (15) au moyen de boulons de serrage (21), les éléments de manchons (14a) des deux paires différant entre eux par une distance mutuelle différente et/ou par une cote de passage différente de leurs manchons.

7. Machine de moulage par injection selon l'une des revendications précédentes, caractérisée par le fait que, lors du déplacement, une paire de rails (22) qui porte l'unité de moulage par injection (S) et qui est disposée dans la direction de l'injection glisse sur des rails (traverses 23) disposés transversalement par rapport à l'axe d'injection et appuyés sur des supports usinés avec précision (24) du socle de la machine.

8. Machine de moulage par injection selon la revendication 7, caractérisée par le fait que les supports (24) sont ménagés sur le bord longitudinal rabattu (25b) des parois latérales (25a) du socle (25) de la machine dans lequel est soudé depuis le haut, à travers deux fentes (25c) et sous le bord longitudinal (25b), un bloc de contre-appui (26) qui sert de contre-appui à une vis (27), celle-ci étant centrée sur le bloc de contre-appui (26), destinée aux traverses (23) et réalisée sous la forme d'une vis de réglage.

9. Machine de moulage par injection selon la revendication 7 ou 8, caractérisée par le fait que la paire de rails (22) est reliée par l'intermédiaire de deux barres transversales (28) pour former un chariot qui porte sur son côté frontal des éléments porteurs (29) destinés à l'unité d'entraînement.

10. Machine de moulage par injection selon la revendication 9, caractérisée par le fait que les éléments porteurs (29) sont constitués par deux corps moulés identiques qui sont disposés symétriquement par rapport à un plan vertical passant par l'axe d'injection (s-s), qui sont réalisés sous la forme de manchons de serrage fendus radialement (29a) dans la région des zones d'extrémité de l'unité d'entraînement et qui peuvent être serrés sur les zones d'extrémité au moyen de boulons de serrage (33) traversant les fentes.

11. Machine de moulage par injection selon l'une des revendications 7 à 10, caractérisée par le fait que les traverses (23) sont reliées entre elles par l'intermédiaire d'un rail d'appui (34) qui présente une ouverture d'enclenchement (34a) dans laquelle l'unité de moulage par injection (S) peut être enclenchée.

12. Machine de moulage par injection selon la revendication 11, caractérisée par le fait que le rail d'appui (34) qui est disposé dans le plan de symétrie (m-m) de la machine de moulage par injection reçoit dans l'ouverture d'enclenchement (34a) un élément d'enclenchement (35) de l'unité de moulage par injection (S) qui est rétractée, par le fait que l'ouverture d'enclenchement sert de point de pivotement (P) en vue d'un pivotement de l'unité de moulage par injection (S), et par le fait qu'après que l'enclenchement a eu lieu, les tiges de piston (13a) des vérins d'entraînement qui sont détachées des manchons (14) peuvent être rétractées.
